# EUROPEAN PATENT APPLICATION

(11) **EP 2 808 857 A1**
(43) Date of publication of application: **03.12.2014**
(21) Application number: 14167978.7
(22) Date of filing: 12.05.2014
(51) Int. Cl.: G08G 5/00, G08G 5/04

(54) **Methods for increasing situational awareness by displaying altitude filter limit lines on a vertical situation display**

(30) Priority: 31.05.2013 US 201313906597
(71) Applicant: Honeywell International Inc., Morristown, NJ 07962-2245 (US)
(72) Inventor: Samuthirapandian, Subash, Morristown, NJ New Jersey 07962-2245 (US); Johnson, Markus Alan, Morristown, NJ New Jersey 07962-2245 (US); Wayman, Ronald Brian, Morristown, NJ New Jersey 07962-2245 (US)
(74) Representative: Houghton, Mark Phillip

(57) **Abstract**

Method are provided for increasing vertical situational awareness when the display of intruder aircraft on a vertical situation display (VSD) is restricted to a specific region of the VSD as determined by an altitude filter. The method comprises displaying a first altitude filter limit line on the VSD.

## Description

### TECHNICAL FIELD

Embodiments described herein relate generally to vehicular display systems and, more particularly, to an avionics display system and method for rendering altitude filter boundary limits on a vertical situation display (VSD) to increase a pilot's situational awareness.

### BACKGROUND

Avionics display systems deployed aboard aircraft have been extensively engineered to visually convey a considerable amount of flight information in an intuitive and readily comprehensible manner. In a conventional Traffic Collision and Avoidance (TCAS) display system, the majority of the information visually expressed on a display, such as a primary flight display, pertains to the host aircraft's flight parameters (e.g., the heading, drift, roll, and pitch of the host aircraft), nearby geographical features (e.g., mountain peaks, runways, etc.), and current weather conditions (e.g., developing storm cells). Such systems also provide and display a significant amount of data relating to neighboring aircrafts. However, if this data and associated symbology were displayed for all traffic detected, the cockpit display system might soon become cluttered with intruder (i.e. neighboring aircraft) symbols. To avoid this, pilots generally select an appropriate intruder altitude filter via the TCAS control panel so that only intruders that fall within the altitude filter limits are displayed on the cockpit display, thus decluttering the display. Still, during long and tiring flights, it is especially important for a pilot to know and be made aware of the altitude filter limits within which intruder aircraft are displayed relative to the host aircraft.

Considering the foregoing, it is desirable to provide an avionics display system and method that visually renders the selected altitude filter limits (i.e. boundaries) on a display [e.g. a vertical situation display (VSD] to enhance awareness of traffic within the selected altitude filter limits.

Other desirable features will become apparent from the following detailed description and the appended claims, taken in conjunction with the accompanying drawings and this background.

### BRIEF SUMMARY

This summary is provided to introduce a selection of concepts in a simplified form that are further described below in the detailed description. This summary is not intended to identify key or essential features of the claimed subject matter, nor is it intended to be used as an aid in determining the scope of the appended claims.

A method is provided for increasing vertical situational awareness on a vertical situation display (VSD) of a host aircraft when the display of intruder aircraft is restricted to a specific region of the VSD that is determined by an altitude filter. The method comprises displaying a first altitude filter boundary line on the VSD.

An aircraft display system for increasing vertical situational awareness on a host aircraft when display of intruder aircraft is restricted to a specific region of a display is also provided. The system comprises a monitor, a mode selection device, and a processor coupled to the monitor and responsive to the mode selection device for generating symbology on the display graphically representing altitude filter boundary lines on the display

In addition, there is also provided a method for increasing vertical situational awareness on a vertical situation display (VSD) of a host aircraft when the display of intruder aircraft is restricted to a specific region of the VSD defined by a first predetermined altitude above the host aircraft and a second predetermined altitude below the host aircraft. The method comprises displaying a first altitude boundary line at the first predetermined altitude on the VSD and displaying a second altitude boundary line at the second predetermined altitude on the VSD.

### BRIEF DESCRIPTION OF THE DRAWINGS

A more complete understanding of the subject matter may be derived by referring to the detailed description and claims when considered in conjunction with the following figures, wherein like reference numerals refer to similar elements throughout the figures, and wherein:
FIG. 1 is functional block diagram of a generalized avionics display system in accordance with an exemplary embodiment;
FIG. 2 is a simplified snapshot of a two dimensional LMAP display that may be generated on the display included in the avionics display system shown in FIG. 1;
FIG. 3 is a simplified snapshot of a two dimensional display further including a simplified VSD display illustrating the vertical situation of a host aircraft;
FIGS. 4-6 are simplified snapshots of a VSD display in accordance with an exemplary embodiment; and
FIG. 7 is a flowchart illustrating an exemplary process that may be performed by the avionics display system shown in FIG. 1 for rendering altitude boundary limit lines on a vertical situation display (VSD) to increase a pilot's situational awareness.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description.

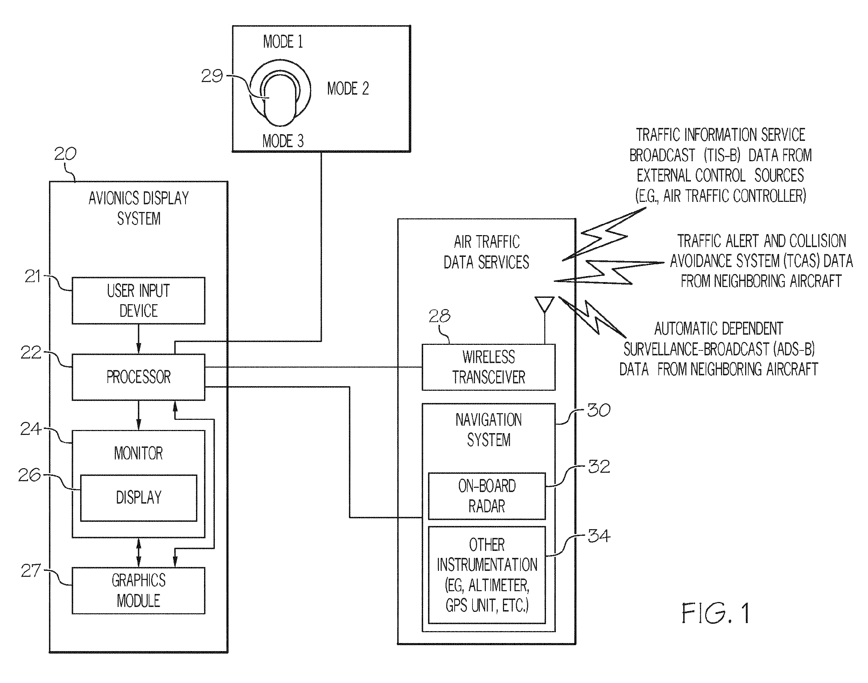

FIG. 1 is a functional block diagram of a generalized avionics display system 20 in accordance with an exemplary embodiment. Avionics display system 20 includes at least one processor 22 and at least one monitor 24, which is operatively coupled to processor 22. During operation of avionics display system 20, processor 22 drives graphics module 27 which, in conjunction with processor 22, drives monitor 24 to produce a graphical display 26 that visually provides a pilot and crew with information pertaining to the host aircraft and to neighboring aircraft within a predetermined vicinity of the host aircraft. Graphical display 26 may include visual representations of one or more of flight characteristics pertaining to a neighboring aircraft, as described more fully below. Processor 22 may generate display 26 in a two dimensional format (e.g., as a lateral or vertical profile map display) or in a hybrid format (e.g., in a picture-in-picture or split screen arrangement) and may be incorporated into all units capable of displaying data; e.g. the primary flight display, the multi-function display, and the interactive navigation display.

Processor 22 may comprise, or be associated with, any suitable number of individual microprocessors, flight control computers, navigational equipment, memories, power supplies, storage devices, interface cards, and other standard components known in the art. In this respect, the processor 22 may include or cooperate with any number of software programs (e.g., avionics display programs) or instructions designed to carry out the various methods, process tasks, calculations, and control/display functions described below, for example, processor 22 may be included within a Flight Management Computer of the type commonly deployed within a Flight Management System (FMS).

Image-generating devices suitable for use as monitor 24 include various analog (e.g., cathode ray tube) and digital (e.g., liquid crystal, active matrix, plasma, etc.) display devices. In certain embodiments, monitor 24 may assume the form of a Head-Down Display (HDD) or a Head-Up Display (HUD) included within an aircraft's Electronic Flight Instrument System (EFIS). Monitor 24 may be disposed at various locations throughout the cockpit. For example, monitor 24 may comprise a primary flight display (PFD) and reside at a central location within the pilot's primary field-of-view. Alternatively, monitor 24 may comprise a secondary flight deck display, such as an Engine Instrument and Crew Advisory System (EICAS) display, mounted at a location for convenient observation by the aircraft crew but that generally resides outside of the pilot's primary field-of-view. In still further embodiments, monitor 24 may be worn by one or more members of the flight crew as a component of an electronic flight bag.

Processor 22 includes one or more inputs operatively coupled to one or more air traffic data sources. During operation of display system 20, the air traffic data sources continually provide processor 22 with navigational data pertaining to neighboring aircraft. In the exemplary embodiment illustrated in FIG. 1, the air traffic data sources include a wireless transceiver 28 and a navigation system 30, which are operatively coupled to first and second inputs of processor 22, respectively. Navigation system 30 includes onboard radar 32 and various other onboard instrumentation 34, such as a radio altimeter, a barometric altimeter, a global positioning system (GPS) unit, and the like.

With continued reference to FIG. 1, wireless transceiver 28 is considered an air traffic data source in that transceiver 28 receives navigational data from external control sources and relays this data to processor 22. For example, wireless transceiver 28 may receive Traffic Information Services-Broadcast (TIS-B) data from external control sources. In a preferred embodiment wireless transceiver 28 receives Traffic Collision Avoidance System (TCAS) data, and may receive Automatic Dependent Surveillance-Broadcast (ADS-B) data from neighboring aircraft. This data, and other such external source data, is formatted to include air traffic information, which may be utilized to determine a neighboring aircraft's current position and the existence and location of air traffic.

TCAS is an airborne system that detects and tracks aircraft near a host aircraft. TCAS includes a processor, antennas, a traffic display (e.g. an LMAP display, a VSD, etc.), and means for controlling the system, such as is shown in FIG. 1. The processor and antennas detect and track other aircraft (known as intruders) by interrogating their transponders, and tracking these intruders on a display. The TCAS processor analyzes the transponder replies to determined range, bearing and relative altitude. If the system determines that a potential hazard exists, it issues visual and aural advisories to the crew. The visual advisory takes the form of symbols on the one or more traffic displays; e.g. the LMAP display and VSD. The system identifies the relative threat of each intruder using various symbols and colors. The intruder's altitude relative to that of the host aircraft is annunciated if the intruder is reporting altitude, and a trend arrow is used to indicate if the intruder is climbing or descending at a rate greater than 500 feet per minute.

The intruder's response to interrogation enables the TCAS system to determine the (1) range between the host aircraft and the intruder, (2) the relative bearing to the intruder, (3) the altitude and vertical speed to the intruder if the intruder is reporting altitude, and (4) the closing rate between the intruder and the host aircraft. Using this data, the system can predict the time to, and the separation at, the intruder's closest point of approach. If the system predicts that certain safe boundaries may be violated, it will issue a Traffic Advisory (TA) to alert the crew that closing traffic is nearby.

As stated previously, visual advisories, in the form of for example three symbols are displayed on one of the LMAP and a VSD displays. The specific symbol type is dependent upon the intruder's location and closing rate. The symbols change shape and color as separation between the intruder and the host aircraft decreases so as to represent increasing levels of concern.

The significance of an intruder symbol on a display may be gleaned from the shape and/or color of the symbol. For example, if an intruder is considered non-threat or other traffic, it is represented graphically as a white or cyan, unfilled diamond on the display. If the intruder aircraft is within six nautical miles and has a relative altitude of ±1,200 feet, the intruder is considered proximate traffic and is represented graphically as a solid, white or cyan filled diamond on the display. An intruder of this type is still not considered a threat and is displayed to assist the pilot in visually acquiring the intruder. A yellow-filled circle is used to display intruders that have caused traffic advisory (TA) to be issued. A TA assists the pilot to visually acquire the intruder aircraft and prepares the pilot for a potential resolution advisory (RA). An RA is displayed as a red filled square.

As referred to previously, a vertical motion arrow in the same color as the intruder symbol and pointing upward or downward is placed on the right side of the symbol to indicate if the intruder is climbing or descending at a rate greater than 500 feet per minute. In addition, the intruder's relative altitude is displayed as a decimal number in units of hundreds of feet and is placed on the right side of the intruder symbol. The color is the same as the intruder symbol. If the intruder is above the host, the altitude is displayed with a plus (+) sign. If below the host, the altitude is displayed with a minus (-) sign. No altitude readout is displayed if the relative altitude is zero. In addition, a distance decimal number representing the distance in miles between the host and the intruder may be displayed above the intruder symbol. The distance is displayed in the same color as the intruder symbol.

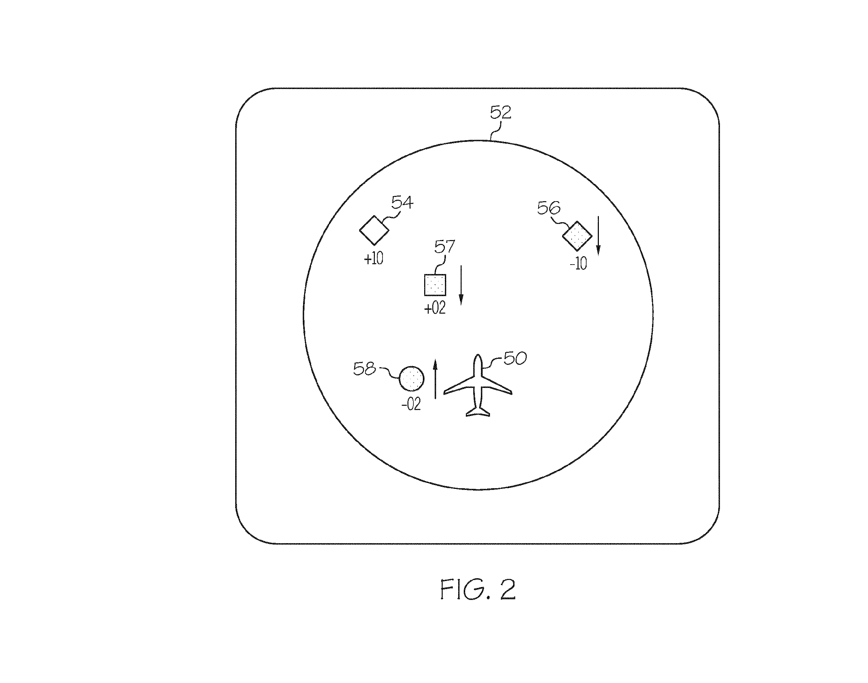

FIG. 2 illustrates a simplified LMAP display graphically representing a host aircraft 50 and a five-nautical-mile range ring 52. Other traffic (OT) 54 is represented by an unfilled, white or cyan diamond 54 flying at an altitude of one-thousand feet above the host aircraft 50. Proximate traffic (PT) 56 at an altitude of one-thousand feet below host aircraft 50 and descending is graphically represented as white or cyan filled (represented by stippling throughout the figures) diamond 56. Traffic advisory (TA) 58 two-hundred feet below host aircraft 50 and climbing is represented by filled circle 58. Finally, a resolution advisory (RA) 55 at an altitude of 200 feet above host aircraft 50 and descending is graphically represented as a filled square.

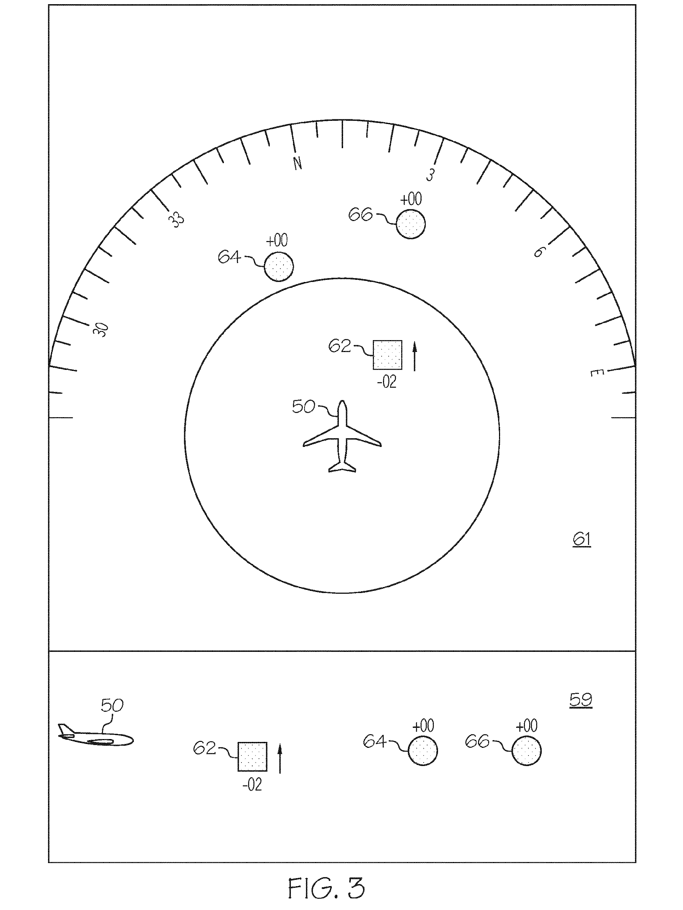

While an LMAP display of the type shown in FIG. 2 provides horizontal situational awareness to a pilot, a VSD provides vertical situational awareness in a similar manner. For example, FIG. 3 is a graphical representation of a simplified VSD 59 illustrating the vertical situation of host aircraft 50 on an LMAP display 61. As can be seen, a first resolution advisory (RA) intruder 62 is 200 feet below host aircraft 50, and is climbing. In addition, first and second traffic advisory (TA) intruders 64 and 66 are flying at substantially the same altitude as host aircraft 50. It should be noted that the VSD 59 may of the type used in conjunction with an ITP (In Trail Procedure) display.

One of the major benefits of a VSD is improved safety, especially with respect to early threat recognition, effectiveness when flying steep approaches, and maintenance of a stabilized path. It provides the crew with an intuitive view of the vertical situation just as the LMAP display provides an intuitive depiction of the horizontal situation. Thus, the crew can access the vertical situation quickly, reducing overall workload. However, a pilot is typically not interested in seeing intruders at all flight levels. For example, during a descent, a pilot would be more interested in intruders below the host aircraft and less interested in those above. Similarly, during an ascent, the pilot would be more interested in intruders at a higher altitude than those at a lower altitude. During level flight, the pilot would generally be equally interested in intruders above and below the host aircraft.

Referring again to FIG. 1, mode switch 29 (e.g. a toggle switch) is configured to enable selection of one of a plurality of modes; e.g. MODE A, MODE B, and MODE C. In each case, an altitude filter prevents the display of intruders that are above the host aircraft by a first predetermined amount and below the host aircraft by a second predetermined amount. For example, during substantially level flight (e.g. MODE A), the first and second amounts may be substantially equal; e.g. plus or minus 2,700 feet, respectively. During an ascent (e.g. MODE B), the first predetermined amount may be larger than the second predetermined amount to provide better awareness of intruder traffic above the host aircraft; e.g. 8,700 feet and 2,700 feet, respectively. Similarly, during a descent (e.g. MODE C), the first predetermined amount may be less than the second predetermined amount to provide better awareness of intruder traffic below the host aircraft; e.g. 2,700 feet and 8,700 feet, respectively. Mode switch may be placed at any convenient location that is suitable for its intended purpose: e.g. on the TCAS control panel.

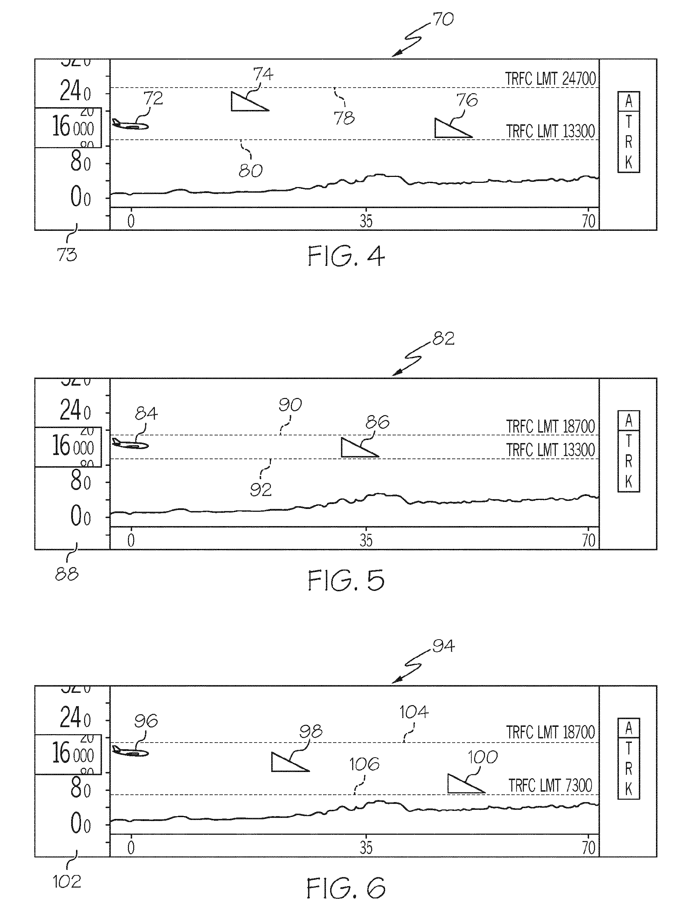

As stated previously, there are times when it is very important for a pilot to be readily aware of the altitude filter limits within which intruders are displayed. Thus, FIGS. 4-7 further illustrate exemplary embodiments of a method and apparatus for rendering and graphically representing the altitude filter boundary limits on a vertical situation display (VSD) to increasing a pilot's vertical situational awareness.

The selected altitude filter limit (MODE 1, MODE 2, or MODE 3)) chosen by the pilot and entered via switch 29 (FIG. 1), is provided to processor 22 along with TCAS data from neighboring aircraft. Processor 22, in conjunction with graphics module 27, provides data to monitor 24 for generating symbology that renders at least one and preferably two altitude filter limit lines, to be displayed on display 26. These lines may be solid, broken, colored, or otherwise visually distinguishable in any suitable manner. Figures 5, 6, and 7 illustrate first, second, and third examples, respectively; however, it is to be noted that these are examples only and should not be construed as limiting.

FIG. 4 is a graphical representation of a VSD screen 70 displaying a host aircraft 72 and intruder aircraft 74 and 76. Host aircraft 72 is climbing and has therefore selected the MODE B on switch 29 (FIG. 1) as previously described. This is provided to processor 22 (FIG.1), which determines the upper and lower altitude filter limits. As illustrated on altitude display 73 in FIG. 4, the altitude of the host aircraft is 16,000 feet. Thus, applying the filter limits used in the above example, the lower altitude filter limit is 16,000 feet minus 2,700 feet; i.e. 13,300 feet. The upper altitude filter limit is 16,000 feet plus 8,700 feet; i.e. 24,700 feet. This data is provided to graphics module 27, which cooperates with monitor 24 to display an upper altitude filter limit line 78 and/or a lower altitude filter limit line 80. While these boundary lines are shown as dashed, they may be displayed in any suitable manner; i.e. dotted, solid, colored, etc. In this manner, the pilot is provided with easily identified and distinguishable altitude filter boundaries tailored to the current flight path thus enhancing the pilot's situational awareness.

FIG. 5 is a graphical representation of a VSD screen 82 displaying a host aircraft 84 and an intruder aircraft 86. In this example, the flight path of host aircraft 84 is substantially level; therefore, the pilot has selected MODE A on switch 29 (FIG. 1) as previously described. This setting is provided to processor 22 (FIG.1), which determines the upper and lower altitude filter limits associated with level flight. As illustrated on altitude display 88 in FIG. 5, the altitude of the host aircraft is once again 16,000 feet. Thus, applying the filter limits used in the above example, the lower altitude filter limit is 16,000 feet minus 2,700 feet; i.e. 13,300 feet. The upper altitude filter limit is 16,000 feet plus 2,700 feet; i.e. 18,700 feet. This data is provided to graphics module 27, which cooperates with monitor 24 to display an upper altitude filter boundary line 90 and/or a lower altitude filter limit line 92.

FIG. 6 is a graphical representation of a VSD screen 94 displaying a host aircraft 96 and intruder aircraft 98 and 100. Host aircraft 96 is descending and has therefore selected MODE C on switch 29 (FIG. 1) as previously described. From this, processor 22 (FIG.1) determines the upper and lower altitude filter limits associated with descent. As illustrated on altitude display 102 in FIG. 6, the altitude of the host aircraft is once again 16,000 feet. Applying the filter limits used described above, the lower altitude filter limit is 16,000 feet minus 8,700 feet; i.e. 7,300 feet. The upper altitude filter limit is 16,000 feet plus 2,700 feet; i.e. 18,700 feet. This data is provided to graphics module 27, which cooperates with monitor 24 to display an upper altitude filter boundary line 104 and/or a lower altitude filter boundary line 106.

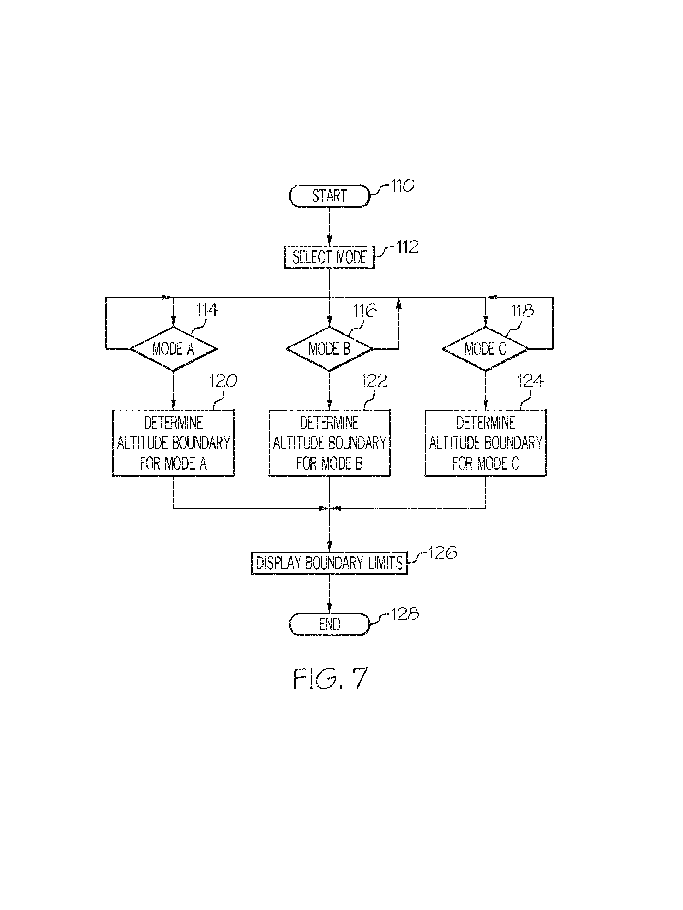

FIG. 7 is a flowchart describing a process 110 for rendering altitude boundary limits on a vertical situation display (VSD) to increase a pilot's situational awareness. A user (e.g. the pilot) first selects a mode (e.g. MODE A, MODE B, or MODE C) corresponding to a desired altitude filter (STEP 112). After it is determined which mode has been selected (STEPS 114, 116, or 118), the altitude limits for the selected mode are retrieved (STEPS 120, 122, or 124), and the altitude filter limit lines are displayed (STEP 126). The process then ends (128).

Thus, there has been provided a system and method for visually renders selected altitude filter limits (i.e. boundaries) on a display (e.g. a vertical situation display (VSD)) to enhance awareness of traffic within the selected altitude limits.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention, it being understood that various changes may be made in the function and arrangement of elements described in an exemplary embodiment without departing from the scope of the invention as set forth in the appended claims.

## Claims

1. A method for increasing vertical situational awareness on a vertical situation display (VSD) on a host aircraft when the display of intruder aircraft is restricted to a specific region of the VSD determined by an altitude filter, the method comprising:
displaying a first altitude filter limit line on the VSD.

2. The method of Claim 1 further comprising displaying a second altitude limit line on the VSD.

3. The method of Claim 2 wherein the first altitude limit line is displayed above the host aircraft.

4. The method of Claim 3 wherein the second altitude limit line is displayed below the host aircraft.

5. The method of Claim 4 wherein the first altitude limit line is displayed a predetermined distance above the host aircraft.

6. The method of Claim 5 wherein the second altitude limit line is displayed a predetermined distance below the host aircraft.

7. The method of Claim 6 wherein the first predetermined distance is substantially equal to the second predetermined distance during substantially level flight.

8. The method of Claim 7 wherein the first predetermined distance is less than the second predetermined distance when the host aircraft is descending.

9. The method of Claim 8 wherein the first predetermined distance is less than the second predetermined distance when the host aircraft is descending.

10. A method for increasing vertical situational awareness on a vertical situation display (VSD) on a host aircraft when the display of intruder aircraft is restricted to a specific region of the VSD determined by a first predetermined altitude above the host aircraft and a second predetermined altitude below the host aircraft, the method comprising:
displaying a first altitude limit line at the first predetermined altitude on the VSD; and
displaying a second altitude limit line at the second predetermined altitude on the VSD.
